# EUROPÄISCHE PATENTSCHRIFT

(11) **EP 2 588 347 B1**
(45) Veröffentlichungstag und Bekanntmachung des Hinweises auf die Patenterteilung: **03.05.2017**
(21) Anmeldenummer: 11733608.1
(22) Anmeldetag: 29.06.2011
(51) Int. Cl.: B60R 21/231

(54) **GASSACKANORDNUNGEN FÜR EIN LENKRAD EINES KRAFTFAHRZEUGES**
AIRBAG ARRANGEMENTS FOR A STEERING WHEEL OF A MOTOR VEHICLE
ENSEMBLE SAC GONFLABLE POUR UN VOLANT D'UN VÉHICULE AUTOMOBILE

(30) Priorität: 25.08.2010 DE 102010039759; 30.06.2010 DE 102010030772
(43) Veröffentlichungstag der Anmeldung: 08.05.2013
(73) Patentinhaber: Takata AG, 63743 Aschaffenburg (DE)
(72) Erfinder: ECKERT, Nick, 12587 Berlin (DE); WOLLNY, Frank, 14199 Berlin (DE); THONHAUSER, Wolfgang, 13158 Berlin (DE)
(74) Vertreter: Maikowski & Ninnemann Patentanwälte Partnerschaft mbB
(86) Internationale Anmeldenummer: PCT/EP2011/060929
(87) Internationale Veröffentlichungsnummer: WO 2012/001058

(56) Entgegenhaltungen:
- DE-A1- 4 240 760
- DE-A1- 19 519 998
- DE-A1-102006 056 919
- US-A1- 2005 098 994
- US-A1- 2007 132 222
- US-A1- 2008 048 420

## Beschreibung

Die Erfindung betrifft Gassackanordnungen für ein Lenkrad eines Kraftfahrzeuges gemäß den Ansprüchen 1 und 3.

Aus dem Stand der Technik sind Gassackanordnungen bekannt, die zum Schutz eines Fahrers eines Kraftfahrzeuges ein in das Lenkrad des Fahrzeuges integrierten Gassack aufweisen. Es ist zudem bekannt, im Innern des Gassacks verlaufende Fangbänder vorzusehen, um die Form des aufgeblasenen Gassacks zu beeinflussen.

Das Dokument US 2005/0098994 A1 offenbart eine Gassackanordnung für ein Kraftfahrzeug mit einem Gassack, der in einer Instrumententafel angeordnet und im Falle eines Aufpralls in einem Bereich vor einem Fahrzeuginsassen aufblasbar ist. Der Gassack weist im entfalteten Zustand einen linken und einen rechten Bereich und eine sich dazwischen befindliche Einbuchtung auf.

Aus dem Dokument DE 195 19 998 A1 ist ein Airbagmodul mit einem Gassack bekannt, bei dem der Gassack mindestens einen gegenüber mindestens einem weiteren Bereich verengten Querschnitt aufweist.

Das Dokument DE 10 2006 056 919 A1 beschreibt einen Fahrerairbag für ein Kraftfahrzeug mit einem Airbag, der in einem aufgeblasenen Zustand eine zum Fahrzeuginnenraum hin gerichtete Prallfläche zum Abstützen des Fahrers aufweist, die einen oberen Bereich zum Abstützen des Kopf- und Schulterbereichs des Fahrers und einen unteren Bereich umfasst, wobei der obere Bereich der Prallfläche in Fahrzeugquerrichtung breiter als der untere Bereich ist, wenn ein Lenkrad in Geradeausfahrtstellung ist.

Das der vorliegenden Erfindung zugrunde liegende Problem besteht darin, eine Gassackanordnung für ein Lenkrad eines Kraftfahrzeuges zu schaffen, deren Gassack eine möglichst gute Rückhaltewirkung aufweist und der so beschaffen ist, dass der Fahrzeuginsasse bei einem Aufprall auf den Gassack dennoch möglichst wenig belastet wird.

Dieses Problem wird durch die Gassackanordnung mit den Merkmalen gemäß Anspruch 1 und durch die Gassackanordnung mit den Merkmalen gemäß Anspruch 3 gelöst. Weiterbildungen der Erfindung sind in den abhängigen Ansprüchen angegeben.

Danach wird eine Gassackanordnung für ein Lenkrad eines Kraftfahrzeuges bereitgestellt, mit
- einem zum Schutz eines Fahrzeuginsassen aufblasbaren Gassack, wobei
- der Gassack im aufgeblasenen und im Fahrzeug (im Lenkrad) montierten Zustand in einem Abschnitt, der in Geradeausfahrtstellung des Lenkrads zum Fahrzeugboden weist, eine Einbuchtung aufweist, um die Ausdehnung des Gassacks in Richtung auf eine sich unterhalb des Brustbereiches erstreckende Körperregion des Fahrzeuginsassen hin zu reduzieren und somit eine Belastung dieser Körperregion bei einem Aufprall des Fahrzeuginsassen auf den Gassack möglichst gering zu halten,
- zusätzlich zu der Einbuchtung in dem zum Fahrzeugboden weisenden Abschnitt des Gassacks ein dem Brustbereich, insbesondere dem Brustbein, des Fahrzeuginsassen zugewandter Abschnitt des aufgeblasenen und im Fahrzeug montierten Gassacks eine Brustbereichseinbuchtung aufweist, um eine Belastung der Brustregion des Fahrzeuginsassen bei einem Aufprall auf den Gassack möglichst gering zu halten, und
- die Brustbereichseinbuchtung durch mindestens ein mit dem Gassack verbundenes und im Inneren des Gassacks verlaufendes Fangband erzeugt wird, das zwischen einem im aufgeblasenen Zustand des Gassacks dem Lenkrad zugewandten Abschnitt und einem dem Lenkrad abgewandten Abschnitt des Gassacks verläuft.

Die Einbuchtung ist insbesondere so positioniert, dass sich der Abdomenbereich des zu schützenden Fahrzeuginsassen bei einer Kollision des Fahrzeugs zumindest teilweise in die Einbuchtung hineinbewegen kann, so dass die Belastung auf diese empfindliche Körperregion reduziert wird. Der Brust- und der Kopfbereich des Fahrzeuginsassen können hingegen auf einen Abschnitt des Gassacks oberhalb der Einbuchtung aufprallen, so dass der Gassack eine gute Rückhaltewirkung bei gleichzeitig reduzierter Belastung des Abdomenbereichs bietet.

Beispielsweise ist die Einbuchtung so positioniert (bezogen auf die Geradeausfahrtstellung des Lenkrades), dass eine durch die Lenkradachse und die Fahrzeughöhenachse (z-Achse) aufgespannte Ebene die Einbuchtung (insbesondere einen Boden der Einbuchtung) durchläuft, wobei eine Fahrzeughöhenachse betrachtet wird, die die Lenkradachse schneidet. Die Einbuchtung ist somit "unter 6 Uhr" bezogen auf das Lenkrad angeordnet, d.h. vollständig unterhalb einer durch die Fahrzeugquer- und die Fahrzeuglängsrichtung aufgespannten Ebene (d.h. einer horizontalen Ebene), die durch den Mittelpunkt des Lenkrades verläuft.

Insbesondere ist die Einbuchtung symmetrisch in Bezug auf die durch die Lenkradachse und die Fahrzeughöhenachse aufgespannte Ebene ausgebildet. Bei normaler Sitzhaltung des Fahrzeuginsassen auf dem Fahrzeugsitz durchläuft somit auch eine Ebene, in der die Lenkradachse und die Wirbelsäule des Fahrzeuginsassen liegen, die Einbuchtung, wobei die Einbuchtung z.B. mittig in Bezug auf den Fahrzeuginsassen angeordnet ist.

Zudem ist die Einbuchtung der Sitzfläche des Fahrzeugsitzes zugewandt, d.h. bezogen auf die übliche Sitzhaltung des Fahrzeuginsassen den Oberschenkeln des Fahrzeuginsassen. Es ist auch denkbar, dass der Gassack und die Einbuchtung so ausgebildet sind, dass der Bodenbereich der Einbuchtung zumindest abschnittsweise zumindest näherungsweise parallel zu der Sitzfläche des Fahrzeugsitzes verläuft.

Aufgrund der Einbuchtung weist der aufgeblasene Gassack einen ersten, mittleren Bereich auf, der entlang einer Ebene, die sich parallel zur Lenkradkranzebene des Lenkrades erstreckt, oder in Fahrzeughöhenrichtung betrachtet, eine geringere Ausdehnung zum Fahrzeugboden hin aufweist als ein zweiter, seitlich an den ersten Bereich angrenzender Bereich des Gassacks. Insbesondere weist der Gassack zwei sich auf unterschiedlichen Seiten des mittleren Bereiches befindliche seitliche Bereiche auf, die eine größere Ausdehnung zum Fahrzeugboden hin besitzen als der mittlere Bereich. Insbesondere bildet ein zum Fahrzeugboden hin weisender Abschnitt einer Außenseite des mittleren Bereiches einen Boden der Einbuchtung, während die beiden an den mittleren Bereich angrenzenden seitlichen Bereiche des Gassacks Seitenwände der Einbuchtung ausbilden.

Beispielsweise ist die Einbuchtung so beschaffen, dass sich ihr Boden (der insbesondere flächig ausgebildet ist) - in Fahrzeughöhenrichtung betrachtet - zumindest näherungsweise auf Höhe der Unterseite des Lenkradkranzes des Lenkrades befindet. Die "Unterseite" des Lenkradkranzes ist derjenige Abschnitt des Lenkradkranzes, der den geringsten Abstand zum Fahrzeugboden aufweist. Die seitlich an die Einbuchtung angrenzenden Bereiche des Gassacks erstrecken sich jedoch zum Fahrzeugboden hin über den Lenkradkranz hinaus und decken ihn somit sicher ab, während die Einbuchtung dafür sorgt, dass insbesondere die Abdomenregion des Fahrzeuginsassen verzögert oder gar nicht auf den Gassack aufprallt.

Es ist jedoch auch denkbar, dass die Einbuchtung tiefer ausgebildet ist, d. h. deren Bodenbereich zwischen einer durch den Mittelpunkt des Lenkrades verlaufenden horizontalen Ebene und der Unterseite des Lenkradkranzes positioniert ist. Des Weiteren ist natürlich auch denkbar, dass die Einbuchtung flacher verläuft, d. h. ihr Boden - in Fahrzeughöhenrichtung betrachtet - außerhalb des Lenkradkranzes positioniert ist, d. h. einen geringeren Abstand zum Fahrzeugboden hin aufweist als der Lenkradkranz.

Die Erfindung betrifft in einem weiteren Aspekt auch eine Gassackanordnung für ein Lenkrad eines Kraftfahrzeuges, mit
- einem zum Schutz eines Fahrzeuginsassen aufblasbaren Gassack, wobei
- der Gassack im aufgeblasenen Zustand (d.h. bei im Lenkrad montierter Gassackanordnung) eine zum Fahrzeugboden weisende Seite aufweist, die im Wesentlichen parallel zu einer durch die Fahrzeuglängs- und die Fahrzeugquerrichtung aufgespannten Ebene verläuft, wobei
- ein dem Brustbereich, insbesondere dem Brustbein, des Fahrzeuginsassen zugewandter Abschnitt des aufgeblasenen und im Fahrzeug montierten Gassacks eine Brustbereichseinbuchtung aufweist, um eine Belastung der Brustregion des Fahrzeuginsassen bei einem Aufprall auf den Gassack möglichst gering zu halten, und
- die Brustbereichseinbuchtung durch mindestens ein mit dem Gassack verbundenes und im Inneren des Gassacks verlaufendes Fangband erzeugt wird, das zwischen einem im aufgeblasenen Zustand des Gassacks dem Lenkrad zugewandten Abschnitt und einem dem Lenkrad abgewandten Abschnitt des Gassacks verläuft.

Beispielsweise ist der Gassack gemäß dem zweiten Erfindungsaspekt so beschaffen, dass er seine Unterseite (d.h. seine zum Fahrzeugboden weisende Seite) zumindest näherungsweise flach ausgebildet ist und sich insbesondere zumindest näherungsweise parallel zu einer Sitzfläche des Fahrersitzes erstreckt. Insbesondere kann der Gassack auch so ausgebildet sein, dass seine zum Fahrzeugboden weisende Seite über im Wesentlichen die gesamte Ausdehnung des Gassacks in Fahrzeuglängsrichtung parallel zu der durch die Fahrzeuglängs- und die Fahrzeughöhenrichtung aufgespannten (also horizontalen) Ebene verläuft.

Insbesondere erstreckt sich der Gassack gemäß dem zweiten Erfindungsaspekt im aufgeblasenen und im Fahrzeug montierten Zustand - in Fahrzeughöhenrichtung und zum Fahrzeugboden hin betrachtet - im Wesentlichen nicht über den Lenkradkranz des Lenkrades hinaus. Beispielsweise verläuft die Unterseite (die dem Fahrzeugboden zugewandte Seite) des Gassacks, in Fahrzeughöhenrichtung betrachtet, zumindest näherungsweise auf Höhe der Unterseite des Lenkradkranzes. Der Unterseite des Lenkradkranzes ist hierbei, wie oben bereits erläutert, derjenige Abschnitt des Lenkradkranzes, der den geringsten Abstand zum Fahrzeugboden des Fahrzeuges aufweist. Es ist jedoch nicht ausgeschlossen, dass sich die Unterseite des Gassacks zwischen dem Mittelpunkt des Lenkrades und der Unterseite des Lenkradkranzes befindet.

Insbesondere verläuft die Unterseite des Gassacks flach, d.h. entlang einer Ebene, die z.B. horizontal oder auch schräg zur Horizontalen ausgerichtet sein kann.

Der Gassack weist gemäß dem zweiten Erfindungsaspekt keine Einbuchtung auf, sondern ist durch den Verlauf seiner Unterseite nach unten hin (zum Fahrzeugboden hin) gewissermaßen verkürzt (abgeflacht), wodurch ebenfalls eine möglichst geringe Belastung insbesondere des Abdomenbereichs des Fahrzeuginsassen erreicht wird, da diese Körperregion später als die oberen Körperregionen des Fahrzeuginsassen oder gar nicht auf den Gassack aufprallen wird.

Es wird darauf hingewiesen, dass die Formulierung, wonach sich der Gassack "im Wesentlichen" nicht über den Lenkradkranz des Lenkrades hinaus ausdehne, bedeutet, dass der aufgeblasene Gassack sehr wohl in einem gewissen Maß über den Lenkradkranz hinausragen kann; beispielsweise kann der Gassack um bis zu 20% des Radius des Lenkrades nach unten über den Lenkradkranz hinausstehen (in Fahrzeughöhenrichtung gemessen).

Insbesondere ist der Gassack (gemäß dem ersten oder zweiten Erfindungsaspekt) so ausgebildet, dass er im aufgeblasenen Zustand oberhalb einer durch die durch die Lenkradachse und die Fahrzeugquerrichtung aufgespannten und durch den Lenkradmittelpunkt verlaufenden Ebene ein größeres Volumen aufweist als unterhalb dieser Ebene.

Aufgrund der Brustbereichseinbuchtung weist der Gassack im aufgeblasenen Zustand - in Fahrzeuglängsrichtung (x-Achse) - betrachtet eine geringere Ausdehnung im Bereich der Brustbereichseinbuchtung auf als insbesondere oberhalb der Brustbereichseinbuchtung. Hierdurch wird bei einem Aufprall des Fahrzeuginsassen auf den Gassack insbesondere der Kopfbereich des Fahrzeuginsassen wirksam zurückgehalten, während der Brustbereich, insbesondere der Bereich des Brustbeins möglichst wenig belastet wird, da die Krafteinleitung in den Oberkörper des zu schützenden Insassen vorwiegend über die im Vergleich zur Brustbereichseinbuchtung erhabenen benachbarten Gassackbereiche erfolgt. Der Gassack weist also zusätzlich zu der (unteren) Einbuchtung, die dazu dient, die unterhalb des Brustbereiches befindlichen Körperpartien möglichst wenig zu belasten, eine weitere Einbuchtung (die Brustbereichseinbuchtung) auf, die einer zu hohen Belastung des Brustbereiches entgegenwirken soll.

Denkbar ist auch, dass der Bodenbereich der Brustbereichseinbuchtung seitlich, d. h. in Fahrzeugquerrichtung betrachtet, jeweils durch einen Gassackbereich flankiert ist, d. h. der Gassack seitlich und oberhalb der Brustbereichseinbuchtung eine größere Ausdehnung in Fahrzeuglängsrichtung aufweist als im Bereich der Brustbereichseinbuchtung. Es ist auch möglich, dass die Brustbereichseinbuchtung unten (zum Fahrzeugboden hin) durch einen weiteren Gassackbereich begrenzt ist, der eine größere Ausdehnung in Fahrzeuglängsrichtung aufweist.

Beispielsweise ist der Bodenbereich der Brustbereichseinbuchtung flächig ausgebildet. Dies ist jedoch nicht zwingend, sondern es ist auch denkbar, dass der Bodenbereich der Brustbereichseinbuchtung zumindest näherungsweise linienartig ausgeformt ist, d. h. die Brustbereichseinbuchtung die Form einer Kerbe aufweist, die z. B. bezogen auf die Geradeausfahrtstellung des Lenkrades parallel zur Fahrzeughöhenrichtung orientiert ist.

Der Gassack kann so ausgebildet sein, dass der Abschnitt (Seitenabschnitt) des Gassacks, in dem die Brustbereichseinbuchtung angeordnet ist, zumindest näherungsweise parallel zu einer durch die Fahrzeugquer- und die Fahrzeughöhenrichtung aufgespannten Ebene verläuft.

Insbesondere ist die Länge des Fangbandes so gewählt, dass es die Ausdehnung des Gassacks in Fahrzeuglängsrichtung reduziert und somit die Brustbereichseinbuchtung erzeugt.

Durch die Breite des Fangbandes an seinem dem Lenkrad abgewandten Ende kann die Brustbereichseinbuchtung dimensioniert werden; z. B. ihre Ausdehnung in Fahrzeughöhenrichtung. Beispielsweise ist das dem Lenkrad zugewandte Ende des Fangbandes schmaler als das dem Lenkrad abgewandte Ende, wodurch einerseits eine Verbindung des Fangbandes im Bereich einer Einströmöffnung des Gassacks (s. Erläuterungen weiter unten) ermöglicht wird und andererseits eine ausreichend große Brustbereichseinbuchtung erzeugt werden kann.

Insbesondere weist der Gassack eine Einströmöffnung auf, durch die Gas eines Gasgenerators in den Gassack einströmen kann. Das Fangband kann lenkradseitig, d. h. mit seinem dem Lenkrad zugewandten Ende, im Bereich dieser Einströmöffnung mit dem Gassack verbunden sein. Genauer wird ein Randbereich der Einströmöffnung durch Klemmung (z. B. an einem im Gassackinneren befindlichen Diffusor oder einen Haltering) an einem Teil der Gassackanordnung (z. B. einem Modulgehäuse oder einem Generatorträger) fixiert, wobei die Verbindung des lenkradseitigen Endes des Fangbandes in diesem fixierten Randbereich des Gassacks erfolgt. Dadurch können Kräfte, die bei Entfaltung des Gassacks auf das Fangband wirken, über den Randbereich abgeleitet werden. Das dem Lenkrad abgewandte Ende des Fangbandes ist mit einem anderen Abschnitt einer Innenseite des Gassacks verbunden.

Es wird darauf hingewiesen, dass der Gassack insbesondere aus einem Gassackmaterial (einem textilen Material) gebildet ist. Beispielsweise wird der Gassack aus zwei Gassacklagen (Zuschnitten) aus dem Gassackmaterial gebildet, wobei die beiden Gassacklagen entlang einer Umfangsnaht miteinander verbunden sind. Das Fangband ist z.B. mit seinem lenkradseitigen Ende mit der ersten Gassacklage und mit seinem anderen Ende mit der zweiten Gassacklage verbunden. Beispielsweise ist das Fangband ebenfalls aus dem Gassackmaterial gebildet.

Das Verbinden des Fangbandes mit dem Gassack erfolgt beispielsweise durch Vernähen, Verschweißen und/oder Verkleben, wobei insbesondere die Verbindung des dem Lenkrad abgewandten Endes des Fangbandes mit dem Gassack linienartig, d. h. entlang einer Verbindungslinie, z. B. über eine Näh-, Schweiß- oder Klebnaht, ausgeführt ist, wobei die Verbindung insbesondere geradlinig verläuft.

Beispielsweise ist die Ebene, in der das Fangband zumindest abschnittsweise verläuft, schräg zu einer durch die Lenkradachse und die Fahrzeughöhenrichtung aufgespannten Ebene orientiert. Die Orientierung des Fangbandes wird insbesondere durch die Orientierung der Verbindungslinie, entlang derer sein dem Lenkrad abgewandtes Ende mit dem Gassack verbunden wird, bestimmt. Beispielsweise ist diese Verbindungslinie so orientiert, dass sich das Fangband (zumindest im Bereich des dem Lenkrad abgewandten Endes) entlang einer Ebene erstreckt, die so orientiert ist, dass sie die (untere) Einbuchtung des Gassacks durchläuft. Mit anderen Worten ist das Fangband auf die untere Einbuchtung, die zur Reduzierung der Belastung einer unteren Körperregion des Fahrzeuginsassen dient, orientiert. Durch diese Orientierung kann über das Fangband zusätzlich die Geometrie der unteren Einbuchtung beeinflusst werden, wobei insbesondere die Tiefe der unteren Einbuchtung von der Orientierung des Fangbandes abhängen kann.

In einer weiteren Ausgestaltung der Erfindung wird die Brustbereichseinbuchtung durch mindestens zwei Fangbänder oder zwei Abschnitte mindestens eines Fangbandes erzeugt. Insbesondere sind die Fangbänder bzw. die Abschnitte im aufgeblasenen Zustand des Gassacks auf unterschiedlichen Seiten einer Ebene, die durch die Lenkradachse und die Fahrzeughöhenrichtung aufgespannt wird, angeordnet.

Für den Fall, dass die Brustbereichseinbuchtung durch zwei Abschnitte eines einzelnen Fangbandes erzeugt wird, sind die dem Lenkrad abgewandten Enden der beiden Abschnitte z.B. über einen Knick oder eine Krümmung einstückig miteinander verbunden. Mit anderen Worten wird das Fangband vor dem Anordnen im Gassack und dem Verbinden mit dem Gassack gefaltet, so dass der Knick oder die Krümmung sowie zwei (insbesondere gleichlange) Abschnitte entstehen. Das Fangband wird dann insbesondere im Bereich des Knicks oder der Krümmung mit dem Gassack verbunden, z. B. linienartig entlang des Knicks oder der Krümmung.

Es ist denkbar, dass die Brustbereichseinbuchtung ausschließlich über zwei Fangbänder bzw. zwei Abschnitte eines Fangbandes ausgebildet wird. Es ist jedoch auch möglich, dass mehr als zwei Fangbänder vorgesehen sind; z.B. können auf jeder Seite der durch die Lenkradachse und die Fahrzeughöhenrichtung aufgespannten Ebene mindestens zwei Fangbänder (bzw. Abschnitte jeweils eines Fangbandes) vorgesehen sein, die (in Fahrzeughöhenrichtung) jeweils einen gewissen Abstand zueinander aufweisen.

Insbesondere sind die Fangbänder bzw. die Abschnitte des einzelnen Fangbandes symmetrisch in Bezug auf die durch die Lenkradachse und die Fahrzeughöhenrichtung aufgespannte Ebene angeordnet, d. h. die durch die Fahrzeughöhenrichtung und die Lenkradachse aufgespannte Ebene stellt eine Symmetrieebene für die Fangbänder dar. Es ist auch möglich, dass auch die untere Einbuchtung und/oder die Brustbereichseinbuchtung des Gassacks in Bezug auf diese Symmetrieebene symmetrisch ausgebildet sind. Beispielsweise kann auch der gesamte Gassack in Bezug auf die durch die Lenkradachse und die Fahrzeughöhenrichtung aufgespannte Ebene zumindest näherungsweise symmetrisch beschaffen sein.

Gemäß einer weiteren Ausgestaltung der Erfindung weist der Gassack eine Verstärkungslage auf, über die das dem Lenkrad abgewandte Ende des Fangbandes mit dem Gassack verbunden ist. Insbesondere dient die Verstärkungslage zum Schutz des Gassacks, insbesondere vor bei Beginn des Aufblasens des Gassacks starken thermischen Belastung und vor bei weiterer Entfaltung des Gassacks auftretenden erhöhten mechanischen Kräften. Es ist denkbar, dass die Verstärkungslage einstückig mit dem Fangband ausgebildet ist. Beispielsweise ist auch möglich, dass die Brustbereichseinbuchtung, wie oben erläutert, über zwei Abschnitte eines einstückigen Fangbandes realisiert wird, wobei auch die Verstärkungslage einstückig mit dem Fangband verbunden sein kann, d. h. die beiden Abschnitte des Fangbandes zur Erzeugung der Brustbereichseinbuchtung und die Verstärkungslage sind aus ein und demselben Zuschnitt hergestellt.

Die Erfindung betrifft auch ein Lenkrad mit der erfindungsgemäßen Gassackanordnung.

Die Erfindung wird im Folgenden anhand von Ausführungsbeispielen unter Bezugnahme auf die Figuren näher erläutert. Es zeigen:
- Fig. 1: eine Seitenansicht der erfindungsgemäßen Gassackanordnung gemäß einem ersten Ausführungsbeispiel der Erfindung;
- Fig. 2: die Gassackanordnung aus Figur 1 in Draufsicht (vom Fahrzeuginsassen her gesehen);
- Fig. 3: eine Draufsicht einer Gassackanordnung gemäß einem zweiten Ausführungsbeispiel der Erfindung;
- Fig. 4: eine Draufsicht einer Gassackanordnung gemäß einem dritten Ausführungsbeispiel der Erfindung; und
- Fig. 5: eine Seitenansicht einer Gassackanordnung gemäß einem vierten Ausführungsbeispiel der Erfindung.

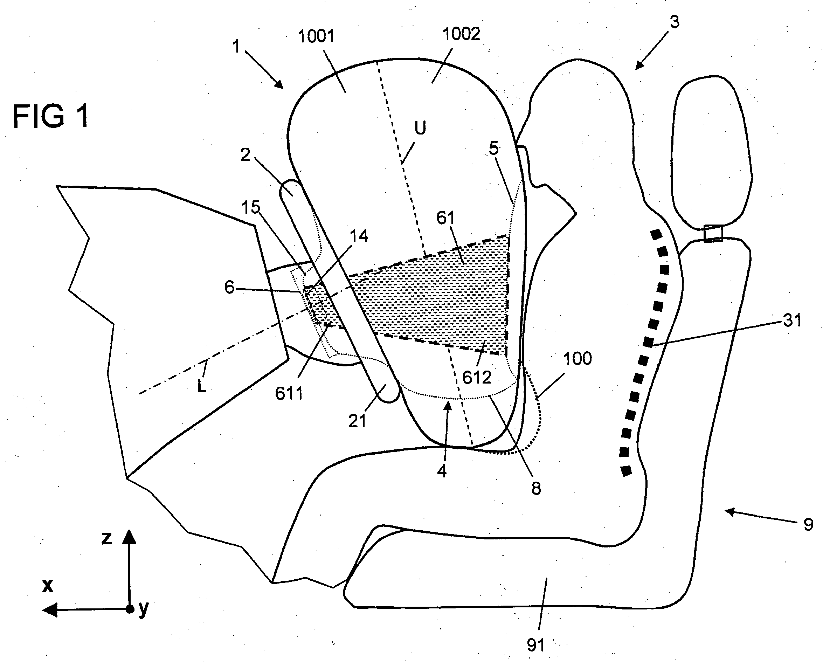

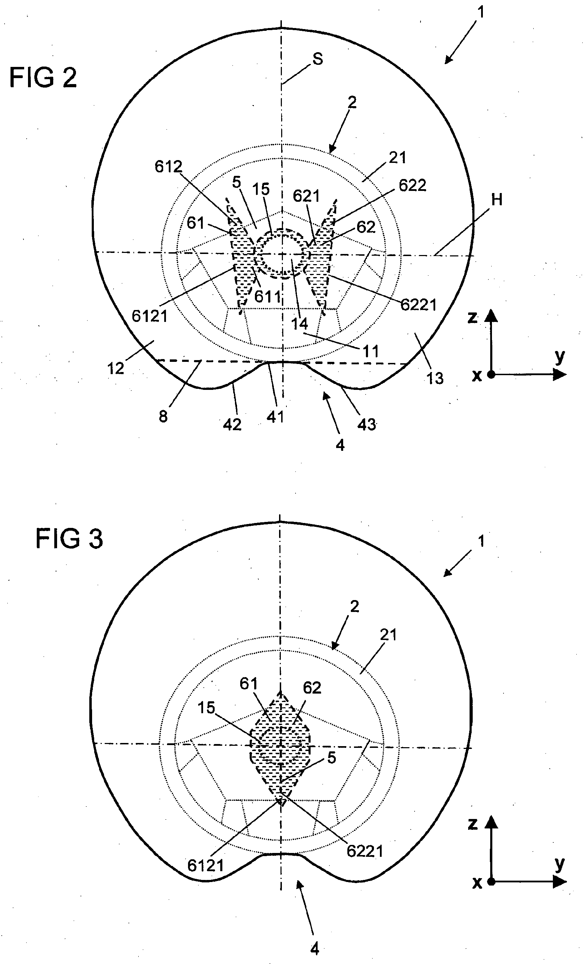

Die in den Figuren 1 und 2 dargestellte lenkradintegrierte Gassackanordnung umfasst einen Gassack 1, der sich im gezeigten aufgeblasenen Zustand zwischen dem Lenkrad 2 eines Fahrzeuges und einem auf einem Fahrzeugsitz 9 befindlichen Fahrzeuginsassen 3 erstreckt. Der Gassack 1 weist an seiner Unterseite, d. h. an seiner Seite, die im aufgeblasenen Zustand dem Fahrzeugboden bzw. einer Sitzfläche 91 des Fahrzeugsitzes 9, auf dem sich der Fahrzeuginsasse befindet, zugewandt ist, eine Einbuchtung 4 auf (vergleiche Figur 2), die dazu dient, die Belastung auf eine unterhalb des Brustbereiches des Fahrzeuginsassen befindliche Körperregion (insbesondere auf den Abdomenbereich) des Fahrzeuginsassen möglichst gering zu halten. Die Einbuchtung 4 ist insbesondere so ausgebildet und positioniert, dass eine durch die Lenkradachse L und die Fahrzeughöhenrichtung aufgespannte Ebene die Einbuchtung (insbesondere deren Bodenbereich) durchläuft. Beispielsweise ist die Einbuchtung 4 symmetrisch zu dieser Ebene. Bei normaler Sitzhaltung des Fahrzeuginsassen 3 durchläuft somit auch eine Ebene, in der sich die Lenkradachse L und die Wirbelsäule 31 des Fahrzeuginsassen 3 erstrecken, durch die Einbuchtung 4 hindurch.

Ohne die Einbuchtung 4 würde sich der aufgeblasene Gassack bis an den Abdomenbereich des Fahrzeuginsassen heran erstrecken und unmittelbar nach Aufblasen des Gassacks gegen diesen Körperbereich drücken. Der Verlauf der unteren Gassackregion ohne die Einbuchtung ist in Fig. 1 durch die gepunktete Linie 100 angedeutet. Die untere Einbuchtung 4 ermöglicht, da der Gassack 1 sich zumindest teilweise schräg entlang der Lenkradkranzebene erstreckt, demnach auch eine abschnittsweise Reduzierung der horizontalen Ausdehnung des unteren Gassackbereichs (d.h. der Ausdehnung in Fahrzeuglängsrichtung).

Gemäß Figur 2 weist der Gassack 1 vom Fahrzeuginsassen her gesehen eine zumindest näherungsweise kreisförmige Kontur auf, die jedoch im unteren Bereich die Einbuchtung 4 ausbildet. Aufgrund der Einbuchtung 4 weist der Gassack 1 einen mittleren Bereich 11 auf, der sich auf beiden Seiten einer durch die Lenkradachse L und die Fahrzeughöhenrichtung aufgespannten Ebene S erstreckt. Entfernt von der Ebene S grenzen seitliche Bereiche 12, 13 an den mittleren Bereich 11 an.

Der mittlere Bereich 11 besitzt - entlang der Fahrzeughöhenrichtung oder entlang der Lenkrandkranzebene betrachtet - eine Ausdehnung zum Fahrzeugboden hin, die geringer ist als die entsprechende Ausdehnung der seitlichen Bereiche 12, 13, wobei insbesondere der sich unterhalb einer durch den Lenkradmittelpunkt verlaufenden horizontalen Ebene H erstreckende Bereich des Gassacks betrachtet wird. Die seitlichen Bereiche 12, 13 sind auf unterschiedlichen Seiten des mittleren Bereiches 11 angeordnet und sind im aufgeblasenen Zustand des Gassacks der benachbart zum Lenkrad 2 angeordneten Fahrzeuglängsseite (Abschnitt 12) bzw. zu der weiter entfernten Fahrzeuglängsseite (Gassackabschnitt 13) zugewandt.

Der mittlere Abschnitt 11 bildet mit einer dem Fahrzeugboden zugewandten Außenseite einen Bodenbereich 41 der Einbuchtung 4 aus, während die flankierenden Gassackabschnitte 12, 13 jeweils eine Seitenwand 42, 43 der Einbuchtung 4 ausformen. Der Bodenbereich 41 liegt auf derselben Höhe wie eine Unterseite eines Lenkradkranzes 21 des Lenkrades 2, während sich die seitlichen Abschnitte 12, 13 über den Lenkradkranz zum Fahrzeugboden hin hinaus erstrecken, um den Lenkradkranz sicher abzudecken. Zudem verläuft der Bodenbereich zumindest abschnittsweise und zumindest näherungsweise parallel zu der horizontalen Ebene H (die durch die Fahrzeugquer- und Fahrzeughöhenrichtung aufgespannt wird).

In den Figuren 1 und 2 (und analog in den übrigen Figuren) ist auch die Möglichkeit dargestellt, anstelle einer Einbuchtung eine parallel zu der horizontalen Ebene H verlaufende Unterseite des Gassacks vorzusehen. Diese Unterseite ist durch die gepunktete Linie 8 dargestellt. Es ist zu erkennen, dass die Unterseite 8 über nahezu die gesamte untere Ausdehnung des Gassacks in Fahrzeuglängsrichtung (x-Richtung) und Fahrzeugquerrichtung (y-Richtung) flach und parallel zu der horizontalen Ebene H verläuft. Des Weiteren befindet sich die Unterseite 8 etwa auf Höhe der Unterseite des Lenkradkranzes 21, d. h. der Gassack ist so beschaffen, dass er sich entlang der Fahrzeughöhenrichtung und zum Fahrzeugboden hin im Wesentlichen nicht über den Lenkradkranz des Lenkrades 2 hinaus ausdehnt, um ein frühes Aufprallen der Abdomenregion des Fahrzeuginsassen auf den Gassack zu vermeiden.

Es ist auch möglich, dass die Unterseite des Gassacks nicht horizontal, sondern geneigt verläuft; dies allerdings so, dass der Gassack sich nicht über die Unterseite des Lenkradkranzes zum Fahrzeugboden hin ausdehnt.

Der Gassack 1 weist von der Seite betrachtet eine Art V-Form auf, wobei sich eine dem Fahrzeuginsassen zugewandte Seite, zumindest näherungsweise parallel zu einer durch die Fahrzeugquer- und die Fahrzeughöhenrichtung aufgespannte Ebene erstreckt, während eine dem Lenkrad 2 zugewandte Seite des Gassacks zumindest näherungsweise parallel zur Lenkradkranzebene verläuft.

Zusätzlich zu der unteren Einbuchtung 4, die zum Schutz einer unterhalb des Brustbereiches befindlichen Körperregion des Fahrzeuginsassen dient bzw. dieser zugeordnet ist, ist eine Brustbereichseinbuchtung 5 in der dem Fahrzeuginsassen zugewandten Seite des Gassacks 1 vorhanden, wobei sich die Brustbereichseinbuchtung auf Höhe des Brustbereiches des Fahrzeuginsassen befindet und dazu dient, die Belastung bei einem Aufprall des Fahrzeuginsassen auf den Gassack auf den Brustbereich möglichst gering zu halten. Die Brustbereichseinbuchtung wird mittels zweier Fangbänder 61, 62 erzeugt, die auf unterschiedlichen Seiten der durch die Lenkradachse L und die die Lenkradachse L schneidende Fahrzeughöhenachse aufgespannten Ebene (Symmetrieebene) S symmetrisch zueinander angeordnet sind.

Die Fangbänder 61, 62 sind mit ihren dem Lenkrad 2 zugewandten Enden 611, 621 mit einem Randbereich 15 des Gassacks 1 verbunden, der eine in der einen Gassacklage 1001 ausgebildeten Einströmöffnung 14 des Gassacks umgibt, durch die Gas eines Gasgenerators (nicht dargestellt) zum Aufblasen des Gassacks in das Innere des Gassacks einströmen kann. Es ist auch möglich, dass der Gasgenerator zumindest abschnittsweise durch die Einströmöffnung in das Innere des Gassacks 1 hineinragt. Der Randbereich 15 ist insbesondere an einem Gasgeneratorträger 6 zusammen mit.dem Gasgenerator festgelegt (z.B. festgeklemmt).

Darüber hinaus kann der Gassack im Randbereich 15 durch eine Verstärkungslage verstärkt sein, die zusammen mit dem Randbereich festgelegt ist und über die die Fangbänder 61, 62 mit dem Gassack 1 verbunden sind. Durch Verbindung der Fangbänder 61, 62 mit dem Randbereich 15 entsteht eine stabile Kopplung zwischen den Fangbändern und dem Gassack, die insbesondere einem Schwingen des Gassacks beim Expandieren entgegenwirkt, so dass der Gassack möglichst schnell seine vorgesehene Schutzposition einnimmt. Insbesondere ist der Gassack 1 zusammen mit dem Gasgenerator, dem Gasgeneratorträger und einem (nicht dargestellten) Gehäuse Bestandteil eines in das Lenkrad integrierten Gassackmoduls.

Die dem Lenkrad 2 abgewandten Enden 612, 622 der Fangbänder 61, 62 sind ebenfalls mit einer Innenseite des Gassacks 1 verbunden, wobei die Verbindung jeweils entlang einer insbesondere geradlinig ausgeführten Verbindungslinie 6121, 6221 (insbesondere in Form einer Kleb-, Schweiß- und/oder Klebnaht) erfolgt. Der Gassack 1 ist aus zwei entlang einer Umfangsnaht U miteinander verbundenen und zumindest näherungsweise deckungsgleichen Gassacklagen 1001, 1002 gebildet, wobei die Fangbänder lenkradseitig mit der einen Gassacklage 1001 und mit ihren dem Lenkrad abgewandten Enden mit der anderen Gassacklage 1002 verbunden sind.

Die Fangbänder 61, 62 weisen darüber hinaus im Bereich ihrer dem Lenkrad abgewandten Enden 612, 622 eine größere Breite auf als im Bereich der dem Lenkrad zugewandten Enden 611, 621. Über die Breite der dem Lenkrad abgewandten Enden 612, 622 wird insbesondere die Höhe (in Fahrzeughöhenrichtung des Fahrzeugs betrachtet) der Brustbereichseinbuchtung 5 bestimmt, während über den Abstand der Bänder 61, 62 zueinander in Fahrzeugquerrichtung, die Breite der Brustbereichseinbuchtung 5 festgelegt wird. Zudem kann über die Länge der Fangbänder 61, 62 in Fahrzeuglängsrichtung die Tiefe der Brustbereichseinbuchtung 5 festgelegt werden.

Die Fangbänder 61, 62 sind insbesondere im Bereich ihrer dem Lenkrad 2 abgewandten Enden 612, 622 entlang einer Ebene orientiert, die durch die untere Einbuchtung 4 hindurch verläuft, d. h. die Fangbänder sind in Richtung der unteren Einbuchtung 4 orientiert, so dass sie in der Draufsicht der Figur 2 gewissermaßen als Schenkel eines Vs angeordnet sind. Durch die Orientierung insbesondere der Enden 612, 622 der Fangbänder 61, 62, d. h. insbesondere durch die Orientierung der Verbindungslinien 6121, 6221, kann auch die Form (z. B. die Tiefe) der unteren Einbuchtung 4 beeinflusst werden, so dass die belastungsreduzierende Wirkung der unteren Einbuchtung 4 auch über die Orientierung der Fangbänder 61, 62 verändert werden kann.

Figur 3 betrifft eine Abwandlung des Ausführungsbeispiels der Figuren 1 und 2. Danach wird die Brustbereichseinbuchtung 5 zwar ebenfalls mittels zweier Fangbänder 61, 62 erzeugt. Allerdings sind die dem Lenkrad abgewandten Enden 612, 622 der beiden Fangbänder 61, 62 nicht beabstandet zueinander mit dem Gassack 1 verbunden, sondern die Verbindungslinien 6121, 6221 fallen zusammen oder sind zumindest nur mit einem sehr geringen Abstand (z. B. weniger als 10 mm) zueinander angeordnet. Es ist auch denkbar, dass beide Enden 612, 622 der Fangbänder 61, 62 über eine gemeinsame Verbindungslinie mit dem Gassack 1 verbunden sind.

Durch diese Art der Befestigung der Enden 612, 622 entsteht eine zumindest im Wesentlichen längliche Brustbereichseinbuchtung 5, die im Beispiel der Figur 3 entlang der Fahrzeughöhenrichtung orientiert ist. Es ist insbesondere auch möglich, dass anstelle zweier separater Fangbänder ein einzelnes Fangband verwendet wird, das vor dem Verbinden mit dem Gassack gefaltet wird, so dass zwei Abschnitte entstehen (die die Fangbänder 61, 62 ersetzen) und die an der Faltstelle über einen Knick oder eine Krümmung miteinander verbunden sind. Das im Gassack angeordnete Fangband verläuft also (von oben betrachtet) V-förmig. Das Fangband wird dann im Bereich des Knicks oder der Krümmung entlang einer Verbindungslinie mit dem Gassack verbunden. Die beiden Enden der Abschnitte des Fangbands sind lenkradseitig dann z.B. wie die beiden separaten Fangbänder 61, 62 mit einem Randbereich 15 des Gassacks 1, der eine Einströmöffnung des Gassacks umgibt, verbunden.

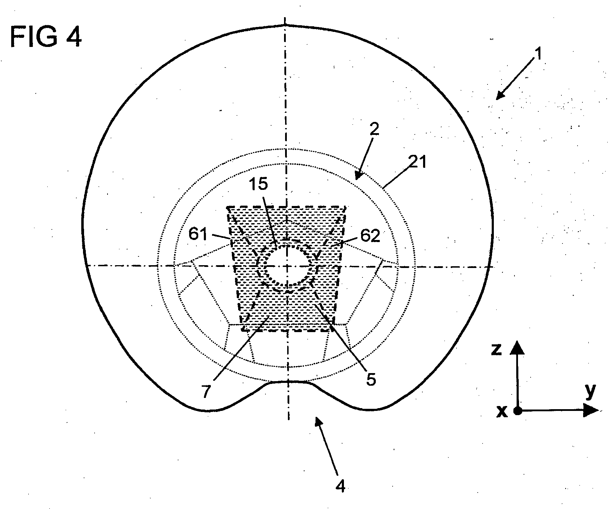

Figur 4 betrifft eine weitere Abwandlung der oben erläuterten Ausführungsbeispiele der Erfindung. Danach weist der Gassack eine Verstärkungslage 7, die aus demselben Material wie der Gassack gebildet sein kann, auf. Die, Verstärkungslage 7 erstreckt sich über einen Abschnitt der Innenseite des Gassacks 1 und zwischen den Fangbändern 61, 62, die gemäß Fig. 2 angeordnet sind.

Insbesondere ist die Verstärkungslage 7 so angeordnet, dass sie zumindest mit einem Abschnitt entlang der Fahrzeuglängsachse der Einströmöffnung 14 des Gassacks 1 gegenüberliegt, so dass zumindest ein Teil des in den Gassack einströmenden Gases auf die Verstärkungslage 7 prallt und somit den Gassack vor einer zu starken thermischen Einwirkung der einströmenden Gase schützt.

Insbesondere ist es möglich, dass die Fangbänder 61, 62 und die Verstärkungslage 7 einstückig ausgebildet sind, d. h. aus einem einzigen Zuschnitt hergestellt werden, wobei vor dem Anordnen des Zuschnitts im Gassack zur Realisierung der Fangbänder 61, 62 Abschnitte von einem flächigen Bereich, der die Verstärkungslage 7 ausbilden soll, abgefaltet werden, so dass die die Fangbänder 61, 62 realisierenden Abschnitte des Zuschnitts über einen Knick oder eine Krümmung einstückig mit der Verstärkungslage 7 verbunden sind. Beispielsweise wird der Zuschnitt dann im Bereich des Knicks oder der Krümmung über eine Verbindungsnaht mit dem Gassack verbunden.

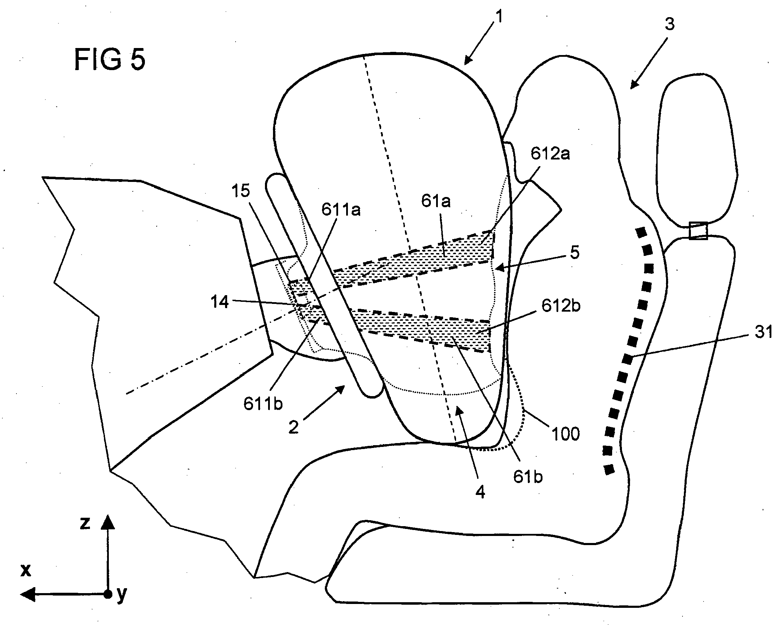

In Figur 5 ist eine weitere Ausführungsform des Gassacks einer erfindungsgemäßen Gassackanordnung dargestellt. Im Unterschied etwa zur Figur 1 sind vier Fangbänder angeordnet, von denen sich jeweils zwei auf einer Seite der durch die durch die Lenkradachse und die Fahrzeughöhenrichtung aufgespannte Symmetrieebene erstrecken.

Da die Figur 5 den Gassack 1 in Seitenansicht zeigt, sind nur zwei Fangbänder 61 a, 61 b zu erkennen, die sich auf derselben Seite der Symmetrieebene befinden. Die Fangbänder 61 a, 61 b sind im Vergleich zu dem Fangband 61 der Figur 1 schmaler ausgeführt, wobei sie - in Fahrzeughöhenrichtung betrachtet - mit einem Abstand zueinander angeordnet sind. Genauer nimmt der Abstand zwischen den Bändern 61 a, 61 b (und entsprechend zwischen den nicht dargestellten Bändern auf der anderen Seite der Symmetrieebene) mit größer werdendem Abstand vom Lenkrad 2 zu.

Es ist denkbar, dass die Fangbänder, die auf derselben Seite der Symmetrieebene angeordnet sind, entlang einer gemeinsamen Ebene orientiert sind, insbesondere, wie in Bezug auf die Figur 1 bereits erläutert, in Richtung auf die untere Einbuchtung 4. Somit sind insbesondere die Verbindungsbereiche, mit denen die dem Lenkrad 2 abgewandten Enden 612a, 612b der Fangbänder 61a, 61b mit dem Gassack 1 verbunden sind, in Richtung auf die untere Einbuchtung 4 orientiert. Die lenkradseitigen Enden 611 a, 611 b sind z.B. ebenfalls mit dem die Einströmöffnung 14 umgebenden Randbereich 15 des Gassacks 1 verbunden.

Die Fangbänder, die sich auf unterschiedlichen Seiten der Symmetrieebene erstrecken, können auch einstückig miteinander verbunden sein. Beispielsweise kann das obere Fangband 61a mit dem (in Fig. 5 nicht dargestellten) oberen Fangband auf der anderen Seite der Symmetrieebene einstückig ausgebildet sein; vgl. die.obigen Ausführungen in Bezug auf Fig. 3.

Es wird darauf hingewiesen, dass Elemente der Ausführungsbeispiele der Figuren 1 bis 5 natürlich auch in Kombination miteinander verwendet werden können. Beispielsweise können die Fangbänder der Figur 5 zusammen mit der in Figur 4 gezeigten Verstärkungslage 4 realisiert werden und/oder gemäß Fig. 3 angeordnet sein.

### Bezugszeichenliste

- 1: Gassack
- 2: Lenkrad
- 3: Fahrzeuginsasse
- 4: Einbuchtung
- 5: Brustbereichseinbuchtung
- 6: Gasgeneratorträger
- 7: Verstärkungslage
- 8: Unterseite
- 9: Fahrzeugsitz
- 11: mittlerer Abschnitt
- 12, 13: seitlicher Abschnitt
- 14: Einströmöffnung
- 15: Randbereich
- 21: Lenkradkranz
- 31: Wirbelsäule
- 41: Boden
- 42, 43: Seitenwand
- 61, 61a, 61b, 62: Fangband
- 91: Sitzfläche
- 611, 611a, 611b, 621: lenkradseitiges Ende
- 612, 612a, 612b, 622: dem Lenkrad abgewandtes Ende
- 6121, 6221: Verbindungslinie
- 1001, 1002: Gassacklage
- S: Symmetrieebene
- H: horizontale Ebene
- L: Lenkradachse

## Patentansprüche

1. Gassackanordnung für ein Lenkrad eines Kraftfahrzeuges, mit
- einem zum Schutz eines Fahrzeuginsassen (3) aufblasbaren Gassack (1), wobei
- der Gassack (1) im aufgeblasenen und im Fahrzeug montierten Zustand in einem Abschnitt, der in Geradeausfahrtstellung des Lenkrads (2) zum Fahrzeugboden weist, eine Einbuchtung (4) aufweist, um die Ausdehnung des Gassacks (1) in Richtung auf eine sich unterhalb des Brustbereiches erstreckende Körperregion des Fahrzeuginsassen hin zu reduzieren und somit eine Belastung dieser Körperregion bei einem Aufprall des Fahrzeuginsassen auf den Gassack möglichst gering zu halten,
**dadurch gekennzeichnet, dass**
- zusätzlich zu der Einbuchtung (4) in dem zum Fahrzeugboden weisenden Abschnitt des Gassacks (1) ein dem Brustbereich des zu schützenden Fahrzeuginsassen (3) zugewandter Abschnitt des aufgeblasenen und im Fahrzeug montierten Gassacks (1) eine Brustbereichseinbuchtung (5) aufweist, um eine Belastung der Brustregion des Fahrzeuginsassen (3) möglichst gering zu halten, und
- die Brustbereichseinbuchtung (5) durch mindestens ein im Inneren des Gassacks (1) verlaufendes Fangband (61, 61 a, 61 b, 62) erzeugt wird, das zwischen einem im aufgeblasenen Zustand des Gassacks (1) dem Lenkrad (2) zugewandten Abschnitt und einem dem Lenkrad (2) abgewandten Abschnitt des Gassacks (1) verläuft.

2. Gassackanordnung nach Anspruch 1, **dadurch gekennzeichnet, dass** sich der aufgeblasene Gassack (1) aufgrund der Einbuchtung (4) einen ersten, mittleren Bereich (11) aufweist, der entlang der Fahrzeughöhenrichtung betrachtet, eine geringere Ausdehnung zum Fahrzeugboden hin aufweist als ein zweiter, seitlich an den ersten Bereich angrenzender Bereich (12, 13) des Gassacks (1).

3. Gassackanordnung für ein Lenkrad eines Kraftfahrzeuges, mit
- einem zum Schutz eines Fahrzeuginsassen (3) aufblasbaren Gassack (1), wobei
- der Gassack (1) im aufgeblasenen und im montierten Zustand eine zum Fahrzeugboden weisende Seite (8) aufweist, die im Wesentlichen parallel zu einer durch die Fahrzeuglängs- und die Fahrzeugquerrichtung aufgespannten Ebene (H) verläuft,
**dadurch gekennzeichnet, dass**
- ein dem Brustbereich des zu schützenden Fahrzeuginsassen (3) zugewandter Abschnitt des aufgeblasenen und im Fahrzeug montierten Gassacks (1) eine Brustbereichseinbuchtung (5) aufweist, um eine Belastung der Brustregion des Fahrzeuginsassen (3) möglichst gering zu halten, und
- die Brustbereichseinbuchtung (5) durch mindestens ein im Inneren des Gassacks (1) verlaufendes Fangband (61, 61a, 61b, 62) erzeugt wird, das zwischen einem im aufgeblasenen Zustand des Gassacks (1) dem Lenkrad (2) zugewandten Abschnitt und einem dem Lenkrad (2) abgewandten Abschnitt des Gassacks (1) verläuft.

4. Gassackanordnung für ein Lenkrad eines Kraftfahrzeuges gemäß Anspruch 3 mit
- einem zum Schutz eines Fahrzeuginsassen (3) aufblasbaren Gassack (1), wobei
- sich der Gassack (1) im aufgeblasenen und im Fahrzeug montierten Zustand - in Fahrzeughöhenrichtung und zum Fahrzeugboden hin betrachtet - im Wesentlichen nicht über den Lenkradkranz (21) des Lenkrades (2) hinaus ausdehnt.

5. Gassackanordnung nach einem der vorhergehenden Ansprüche, **dadurch gekennzeichnet, dass** die Brustbereichseinbuchtung (5) einen flächigen Bodenbereich aufweist.

6. Gassackanordnung nach einem der vorhergehenden Ansprüche, **dadurch gekennzeichnet, dass** die Brustbereichseinbuchtung (5) einen länglichen Bodenbereich aufweist.

7. Gassackanordnung nach einem der vorhergehenden Ansprüche, **dadurch gekennzeichnet, dass** das dem Lenkrad (2) zugewandte Ende (611, 611a, 611b, 621) des Fangbandes (61, 61a, 61b, 62) schmaler ist als das dem Lenkrad (2) abgewandte Ende (612, 612a, 612b, 622).

8. Gassackanordnung nach einem der vorhergehenden Ansprüche, **dadurch gekennzeichnet, dass** sich die Ebene, in der das Fangband (61, 61 a, 61 b, 62) zumindest abschnittsweise verläuft, schräg zu einer durch die Lenkradachse (L) und die Fahrzeughöhenrichtung aufgespannten Ebene (S) erstreckt.

9. Gassackanordnung nach Anspruch 8, **dadurch gekennzeichnet, dass** sich das Fangband (61, 61a, 61b, 62) zumindest abschnittsweise entlang einer Ebene erstreckt, die so orientiert ist, dass sie die Einbuchtung (4) durchläuft.

10. Gassackanordnung nach einem der einem der vorhergehenden Ansprüche, **dadurch gekennzeichnet, dass** die Brustbereichseinbuchtung (5) durch mindestens zwei Fangbänder (61, 61 a, 61 b, 62) oder zwei Abschnitte mindestens eines Fangbandes erzeugt wird, die im aufgeblasenen Zustand des Gassacks (1) auf unterschiedlichen Seiten einer Ebene (S), die durch die Lenkradachse (L) und die Fahrzeughöhenrichtung aufgespannt wird, angeordnet sind.

11. Gassackanordnung nach Anspruch 10, **dadurch gekennzeichnet, dass** die dem Lenkrad (2) abgewandten Enden der beiden Abschnitte des Fangbandes über einen Knick oder eine Krümmung einstückig miteinander verbunden sind und das Fangband im Bereich des Knicks oder der Krümmung mit dem Gassack (1) verbunden ist.

12. Gassackanordnung nach Anspruch 10 oder 11, **dadurch gekennzeichnet, dass** auf jeder Seite der Ebene (S) mindestens zwei Fangbänder angeordnet sind.

13. Gassackanordnung nach einem der Ansprüche 10 bis 12, **dadurch gekennzeichnet, dass** die Fangbänder (61, 61a, 61b, 62) oder die Abschnitte des Fangbandes symmetrisch in Bezug auf die durch die Lenkradachse und die Fahrzeughöhenrichtung aufgespannte Ebene (S) angeordnet sind.

## Claims

1. Gasbag arrangement for a steering wheel of a motor vehicle, comprising
- a gasbag which can be inflated for protecting a vehicle occupant, wherein
- the gasbag (1), when inflated and mounted in the vehicle, comprises an indentation (4) in a portion that points towards the vehicle floor in the straight-ahead position of the steering wheel (2) for reducing the expansion of the gasbag (1) in the direction of a body region extending below the thorax region of the vehicle occupant such that a load on that body region during an impact of the vehicle occupant on the gasbag is minimized,
**characterized in that**
- when the gasbag is inflated and mounted in the vehicle, in addition to the indentation (4) in a portion of the gasbag (1) that points towards the vehicle floor, a portion of the gasbag (1) facing towards the thorax region of the vehicle occupant (3) to be protected comprises a thorax region indentation (5) in order to minimize the load on the thorax region of the vehicle occupant (3) and
- the thorax region indentation (5) is generated by a tether (61, 61 a, 61 b, 62) extending in the interior of the gasbag (1), the tether extending between a portion of the gasbag (1) that, when the gasbag (1) is inflated, faces towards the steering wheel (2) and a portion of the gasbag (1) that faces away from the steering wheel (2).

2. Gasbag arrangement as claimed in claim 1, **characterized in that** due to the indentation (4) the inflated gasbag (1) comprises a first, middle region (11) which - viewed along the vertical vehicle direction - has a smaller expansion towards the vehicle floor than a second region (12, 13) arranged adjacent the first region of the gasbag (1).

3. Gasbag arrangement for a steering wheel of a motor vehicle, comprising
- a gasbag (1) which can be inflated for protecting a vehicle occupant (3), wherein
- the gasbag (1), when inflated and mounted in the vehicle, comprises a side (8) facing towards the vehicle floor and extending essentially parallel to a plane (H) spanned by the longitudinal vehicle direction and the transverse vehicle direction,
**characterized in that**
- when the gasbag is inflated and mounted in the vehicle, a portion of the gasbag (1) facing towards the thorax region of the vehicle occupant (3) to be protected comprises a thorax region indentation (5) in order to minimize the load on the thorax region of the vehicle occupant (3) and
- the thorax region indentation (5) is generated by a tether (61, 61 a, 61 b, 62) extending in the interior of the gasbag (1), the tether extending between a portion of the gasbag (1) that, when the gasbag (1) is inflated, faces towards the steering wheel (2) and a portion of the gasbag (1) that faces away from the steering wheel (2).

4. Gasbag arrangement for a steering wheel of a motor vehicle as claimed in claim 3, comprising
- a gasbag (1) which can be inflated for protecting a vehicle occupant (3), wherein
- the gasbag (1), when inflated and mounted in the vehicle and viewed along the vertical vehicle direction and towards the vehicle floor, essentially does not extend beyond the steering wheel rim (21) of the steering wheel (2).

5. Gasbag arrangement as claimed in one of the preceding claims, **characterized in that** the thorax region indentation (5) comprises a plane bottom region.

6. Gasbag arrangement as claimed in one of the preceding claims, **characterized in that** the thorax region indentation (5) comprises a longitudinal bottom region.

7. Gasbag arrangement as claimed in one of the preceding claims, **characterized in that** the ending (611, 611 a, 611b, 621) of the tether (61, 61 a, 61 b, 62) facing towards the steering wheel (2) is thinner than the ending (612, 612a, 612b, 622) facing away from the steering wheel (2).

8. Gasbag arrangement as claimed in one of the preceding claims, **characterized in that** the plane in which the tether (61, 61 a, 61 b, 62) extends is orientated at least partially obliquely with respect to a plane (S) spanned by the steering axis (L) and the vertical vehicle direction.

9. Gasbag arrangement as claimed in claim 8, **characterized in that** the tether (61, 61 a, 61 b, 62) extends at least partially along a plane which is orientated in such a way that it passes through the indentation (4).

10. Gasbag arrangement as claimed in one of the preceding claims, **characterized in that** the thorax region indentation (5) is generated by at least two tethers (61, 61 a, 61 b, 62) or two portions of at least one tether which in the inflated state of the gasbag (1) are arranged on different sides of a plane (S) spanned by the steering axis (L) and the vertical vehicle direction.

11. Gasbag arrangement as claimed in claim 10, **characterized in that** the endings of the two portions of the tether facing away from the steering wheel (2) are integrally connected to one another via a kink or a bending and the tether is connected to the gasbag (1) in the region of the kink or the bending.

12. Gasbag arrangement as claimed in claim 10 or 11, **characterized in that** at least two tethers are arranged on each side of the plane (S).

13. Gasbag arrangement as claimed in one of the claims 10 to 12, **characterized in that** the tethers (61, 61 a, 61 b, 62) or the portions of the tether are arranged symmetrically relative to the plane (S) spanned by the steering axis and the vertical vehicle direction.

## Revendications

1. Agencement de sac à gaz pour le volant d'un véhicule automobile, présentant
un sac (1) à gaz qui peut être gonflé pour protéger un passager (3) du véhicule,
le sac (1) à gaz présentant à l'état gonflé et monté dans le véhicule, dans une section orientée vers le fond du véhicule lorsque le volant (2) est situé en position de conduite en ligne droite un retrait (4) qui réduit l'extension du sac (1) à gaz dans la direction de la partie du corps du passager du véhicule qui s'étend en dessous du torse et qui réduit ainsi autant que possible la sollicitation de cette partie du corps lorsque le passager du véhicule vient percuter le sac à gaz,
**caractérisé en ce que**
en plus du retrait (4) dans la section du sac (1) à gaz tournée vers le plancher du véhicule, une section du sac (1) à gaz gonflé et monté dans le véhicule, tournée vers le torse du passager (3) du véhicule qui doit être protégé, présente un retrait (5) de torse qui réduit autant que possible l'impact sur le torse du passager (3) du véhicule, et
le retrait (5) de torse étant formé par au moins une bande de reprise (61, 61a, 61b, 62) qui s'étend à l'intérieur du sac (1) à gaz entre une section du sac (1) à gaz tournée vers le volant (2) lorsque le sac à gaz est à l'état gonflé et une section du sac (1) à gaz non tournée vers le volant (2).

2. Agencement de sac à gaz selon la revendication 1, **caractérisé en ce que** du fait du retrait (4), le sac (1) à gaz gonflé présente une première partie centrale (11) dont l'extension dans le sens de la hauteur du véhicule est plus petite qu'une deuxième partie (12, 13) du sac (1) à gaz latéralement adjacente à la première partie.

3. Agencement de sac à gaz pour le volant d'un véhicule automobile, présentant
un sac (1) à gaz qui peut être gonflé pour protéger un passager (3) du véhicule,
le sac (1) à gaz présentant à l'état gonflé et monté un côté (8) orienté vers le plancher du véhicule et qui s'étend essentiellement en parallèle à un plan (H) sous-tendu par la direction longitudinale du véhicule et la direction transversale du véhicule,
**caractérisé en ce que**
une section du sac (1) à gaz gonflé et monté dans le véhicule, tournée vers le torse du passager (3) du véhicule qui doit être protégé, présente un retrait (5) de torse qui réduit autant que possible l'impact sur le torse du passager (3) du véhicule,
le retrait (5) de torse étant formé par au moins une bande de reprise (61, 61a, 61b, 62) qui s'étend à l'intérieur du sac (1) à gaz entre une section du sac (1) à gaz tournée vers le volant (2) lorsque le sac à gaz est à l'état gonflé et une section du sac (1) à gaz non tournée vers le volant (2).

4. Agencement de sac à gaz pour le volant d'un véhicule automobile selon la revendication 3, présentant
un sac (1) à gaz qui peut être gonflé pour protéger un passager (3) du véhicule,
le sac (1) à gaz ne s'étendant dans le sens de la hauteur du véhicule et en direction du plancher du véhicule essentiellement pas au-delà de la couronne (21) du volant (2) lorsqu'il est à l'état gonflé et monté dans le véhicule.

5. Agencement de sac à gaz selon l'une des revendications précédentes, **caractérisé en ce que** le retrait (5) de torse présente une partie de fond plane.

6. Agencement de sac à gaz selon l'une des revendications précédentes, **caractérisé en ce que** le retrait (5) de torse présente une partie de fond allongée.

7. Agencement de sac à gaz selon l'une des revendications précédentes, **caractérisé en ce que** l'extrémité (611, 611a, 611b, 621), tournée vers le volant (2), de la bande de reprise (61, 61a, 61b, 62) est plus étroite que l'extrémité (612, 612a, 612b, 622) non tournée vers le volant (2).

8. Agencement de sac à gaz selon l'une des revendications précédentes, **caractérisé en ce que** le plan dans lequel la bande de reprise (61, 61a, 61b, 62) s'étend au moins en partie s'étend obliquement par rapport à un plan (S) sous-tendu par l'axe (L) du volant et le sens de la hauteur du véhicule.

9. Agencement de sac à gaz selon la revendication 8, **caractérisé en ce qu'**au moins certaines parties de la bande de reprise (61, 61a, 61b, 62) s'étendent dans un plan orienté de telle sorte qu'il traverse le retrait (4).

10. Agencement de sac à gaz selon l'une des revendications précédentes, **caractérisé en ce que** le retrait (5) de torse est formée par au moins deux bandes de reprise (61, 61a, 61b, 62) ou deux sections d'au moins une bande de reprise qui, lorsque le sac (1) à gaz est à l'état gonflé, sont disposés sur des côtés différents d'un plan (S) sous-tendu par l'axe (L) du volant et le sens de la hauteur du véhicule.

11. Agencement de sac à gaz selon la revendication 10, **caractérisé en ce que** les extrémités des deux sections de la bande de reprise non tournées vers le volant (2) sont reliées l'une à l'autre d'un seul tenant par un coude ou une courbe et **en ce que** la bande de reprise est reliée au sac (1) à gaz au niveau du coude ou de la courbe.

12. Agencement de sac à gaz selon les revendications 10 ou 11, **caractérisé en ce qu'**au moins deux bandes de reprise sont disposées de chaque côté du plan (S).

13. Agencement de sac à gaz selon l'une des revendications 10 à 12, **caractérisé en ce que** les bandes de reprise (61, 61a, 61b, 62) ou les sections de bande de reprise sont disposées symétriquement par rapport au plan (S) sous-tendu par l'axe du volant et le sens de la hauteur du véhicule.
